# EUROPÄISCHE PATENTSCHRIFT

(11) **EP 0 414 010 B1**
(45) Veröffentlichungstag und Bekanntmachung des Hinweises auf die Patenterteilung: **13.04.1994**
(21) Anmeldenummer: 90114918.7
(22) Anmeldetag: 03.08.1990
(51) Int. Cl.: B65G 47/24, B65G 47/252, B65G 47/52, B65G 47/44

(54) **Leitvorrichtung für Flaschen**
Bottle guide
Guide-bouteille

(30) Priorität: 23.08.1989 DE 8910101 U
(43) Veröffentlichungstag der Anmeldung: 27.02.1991
(73) Patentinhaber: FIRMA ULRICH HEIN, D-59427 Unna (DE)
(72) Erfinder: Hein, Ulrich, Dipl.-Ing., D-4750 Unna-Massen (DE)
(74) Vertreter: Betten & Resch

(56) Entgegenhaltungen:
- DE-B- 1 259 244
- DE-U- 8 910 101
- US-A- 2 981 394
- US-A- 3 270 903
- US-A- 3 446 334

## Beschreibung

Die Erfindung betrifft eine Leitvorrichtung zum Transport von Flaschen zu einer Flaschenhandhabungseinheit, insbesondere einer Hebevorrichtung. Unter "Flaschen" im Sinne der vorliegenden Erfindung sind auch andere Behältnisse aus Materialien insbesondere Glas oder Kunststoff zu verstehen.

Bei Abfüllbetrieben beispielsweise in der Getränke- und Nahrungsmittelindustrie werden Mehrweggefäße, insbesondere Flaschen durch den Endverbraucher unsortiert zwecks Wiederbefüllung zurückgegeben. Hiermit besteht das Erfordernis, eine Separierung der Flaschen entweder manuell oder durch Sortiermaschinen vorzunehmen. Unbrauchhare, d.h. beschädigte, oder nicht mehr zu reinigende Flaschen werden entweder visuell oder durch Inspektionsmaschinen aus der Abfüllinie ausgeschleußt und einer Flaschenzerkleinerungsanlage zugeführt. In der Regel ist der Flaschenzerkleinerungsanlage ein Scherbenkübel nachgeschaltet, der sich unterhalb der Flaschenzerkleinerungsanlage befindet.

Aufgrund der Höhe des Scherbenkübels und der darüber angeordneten Flaschenzerkleinerungsanlage liegt die Eingabeöffnung der Flaschenzerkleinerungsanlage in der Regel wesentlich höher als die Transportbandhöhe der aussortierten Flaschen. Um diese Höhendifferenz zu überwinden, wird eine Hebeanlage, beispielsweise ein Becherwerk, zwischen Transportband und Flaschenzerkleinerungsanlage geschaltet. Hierbei muß der Flaschenstrom klar definiert sein, dh. die Flaschen müssen der Hebeanlage durch Zwangsführung sicher und immer richtungsgleich zugeführt werden.

Der Erfindung liegt daher die Aufgabe zugrunde, eine Leitvorrichtung insbesondere für Flaschen zu schaffen, welche platzsparend ist und die Flaschen der nachfolgenden Flaschenhandhabungseinheit quer zur Ausgaberichtung der Flaschen aus der Leitvorrichtung liegend zuführt bzw. anbietet.

Die zur Lösung dieser Aufgabe geschaffene erfindungsgemäße Leitvorrichtung ist im wesentlichen gekennzeichnet durch ein Gehäuse mit einer Eingabeöffnung zum im wesentlichen vertikalen Durchtritt der Flaschen, eine unterhalb der Öffnung angeordnete Schanze zum Überführen der Flaschen in eine im wesentlichen horizontale Position, eine im Anschluß an die Schanze angeordnete, geneigte Übergabefläche zum seitlichen Abtransport der im wesentlichen in horizontaler Position befindlichen Flaschen unter Beibehaltung ihrer im wesentlichen horizontalen Ausrichtung, sowie eine Ausgabeöffnung im Gehäuse im Bereich der geneigten Übergabefläche.

Im Falle der erfindungsgemäßen Leitvorrichtung wird somit der beispielsweise vom Transportband kommende Flaschenstrom um 90° umgelenkt und vereinzelt. Durch Zwangsführung werden die Flaschen der nachgeschalteten Flaschenhandhabungseinheit, also insbesondere der Hebevorrichtung (z.B. Elevator) so zugeführt, daß sie in horizontaler Ausrichtung parallel zur Umlaufachse der Becheranordnung liegend von der Becheranordnung aufgenommen werden könne.

Der der Leitvorrichtung zugeführte Flaschenstrom ist einspurig, d.h. die der Leitvorrichtung zuzuführenden Flaschen werden hintereinander laufend einreihig zugeführt; hierbei können die Flaschen liegend oder stehend transportiert werden. Sobald sie die Eingabeöffnung der Leitvorrichtung erreicht haben, fallen sie in diese hinein - wobei sie, falls sie liegend zugeführt worden sind, in eine in wesentlichen vertikale Position kippen - und durch eine entsprechende Fallhöhe erfahren die Flaschen eine Beschleunigung. Über die nachgeschaltete Schanze erfolgt eine 90°-Umlenkung der Flaschen. Die der Schanze nachgeschaltete, geneigte Übergabefläche führt sodann die Flaschen in der gewünschten Ausrichtung der nachgeschalteten Flaschenhandhabungseinheit, also insbesondere der Hebeanlage, zu.

Um die vertikale Ausrichtung der in die Leitvorrichtung eintretenden Flaschen weiter zu fördern, kann an der Eingabeöffnung ein trichterförmiger Führungsabschnitt anschließen.

Gemäß weiteren vorteilhaften Merkmalen der Erfindung kann die Schanze im wesentlichen kreisbogenförmig ausgebildet sein, und die Schanze kann im wesentlichen vertikal beginnen und im wesentlichen horizontal enden. Hierbei hat es sich als besonders vorteilhaft herausgestellt, wenn die Schanze mit einer geringfügigen Gegensteigung endet, so daß das vorlaufende Flaschenende beim "Abheben" von der Schanze noch kurz nach oben beschleunigt wird. Weiterhin hat es sich als besonders vorteilhaft erwiesen, wenn die geneigte Übergabefläche vorn Schanzenende nach unten beabstandet ist, wobei dieser Abstand in der Praxis in der Größenordnung von einigen Zentimetern liegen wird.

Aus lärmschutztechnischen Gründen ist das Gehäuse vorzugsweise vollständig schallisoliert ausgebildet. Aus dem gleichen Grunde bestehen die Schanze sowie das die Übergabefläche bildende Leitblech vorzugsweise aus entdröhntem Sandwich-Blech.

Im folgenden wird ein bevorzugtes Ausführungsbeispiel der Erfindung anhand der Zeichnung näher erläutert. In der Zeichnung zeigen:
- Fig. 1: eine Draufsicht auf die aus Transporteur, Leitvorrichtung, Elevator und Flaschenzerkleinerungsanlage bestehende Anordnung in schematischer Darstellung,
- Fig. 2: eine Seitenansicht der Anordnung gemäß Fig. 1 in schematischer Darstellung,
- Fig. 3: die erfindungsgemäße Leitvorrichtung in perspektivischer Darstellung ohne Verkleidung,
- Fig. 4: eine Draufsicht auf die Leitvorrichtung gemäß Fig. 3 in schematischer Darstellung,
- Fig. 5: eine Seitenansicht der Leitvorrichtung in schematischer Darstellung in Richtung des Pfeiles A gemäß Fig. 4 und
- Fig. 6: eine weitere Seitenansicht der Leitvorrichtung in schematischer Darstellung in Richtung des Pfeiles B gemäß Fig. 4.

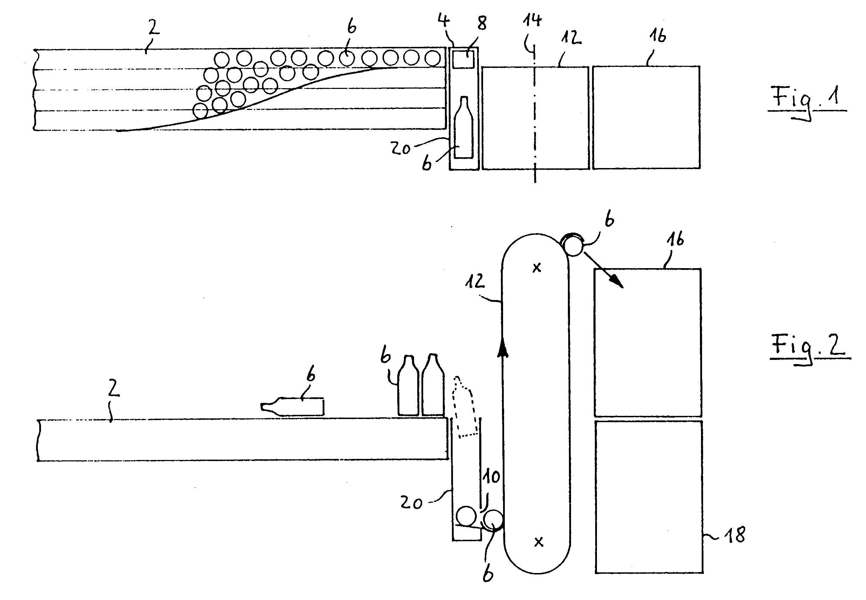

Zunächst wird auf die Figuren 1 und 2 Bezug genommen. Mit der Bezugsziffer 2 ist ein mehrspuriger Transporteur bezeichnet, der bei einer hieran anschließenden Leitvorrichtung 4 endet. Die Flaschen 6 werden, wie dargestellt, der Leitvorrichtung 4 einspurig zugeführt, und zwar liegend oder stehend. Die Flaschen 6 gelangen sodann durch eine in der Leitvorrichtung 4 ausgebildete Eingabeöffnung 8 in das Innere der Leitvorrichtung 4, wobei liegende Flaschen durch den Eintritt in die Eingabeöffnung 8 in etwa vertikal aufgerichtet werden. In der Leitvorrichtung 4 werden die Flaschen nacheinader in der weiter unter zu beschreibenden weise in eine horizontalen Lage überführt und gelangen in dieser Ausrichtung durch eine Ausgabeöffnung 10 aus der Leitvorrichtung 4 heraus und zu einem Elevator 12, der beispielsweise als Becherwerk ausgebildet sein kann. Der Elevator 12 nimmt die Flaschen 6 in ihrer horizontalen Ausrichtung, die parallel zu den Umlaufachsen 14 des Elevators 12 verläuft, auf und hebt sie auf die erforderliche Höhe an. Vom Elevator 12 gelangen die Flaschen 6 dann von oben in ein Flaschenzerkleinerungsvorrichtung 16, wo sie zerkleinert werden. Die Scherben fallen von der Flaschenzerkleinerungsvorrichtung 16 in einen darunter angeordneten Scherbenkübel 18, welcher als auswechselbarer Container ausgebildet sein kann.

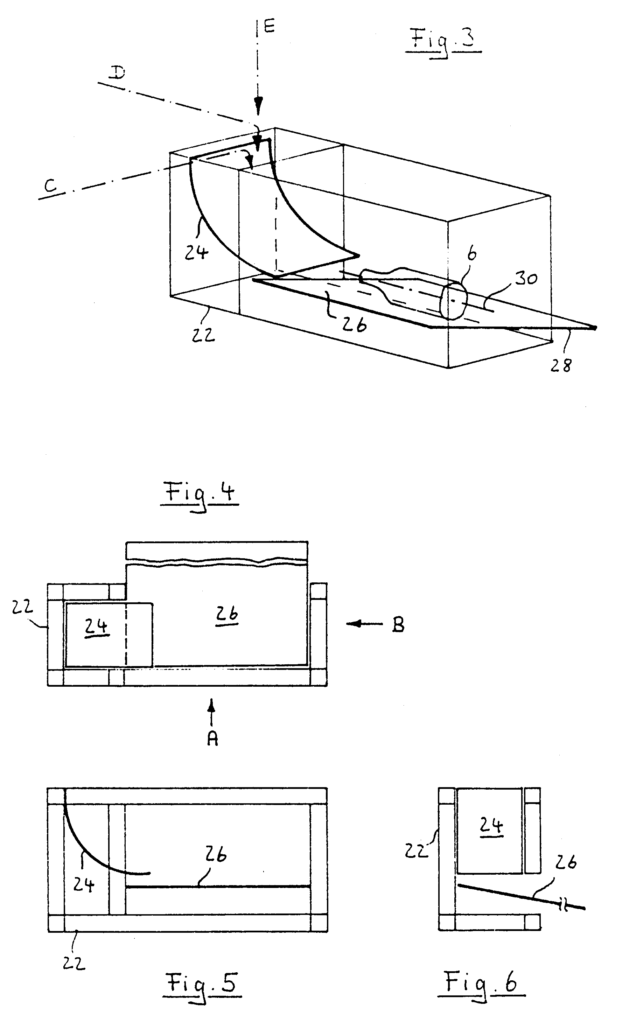

Im folgenden wird anhand der Figuren 3 bis 6 die Leitvorrichtung 4 näher beschrieben.

Das Gehäuse 20 der Leitvorrichtung 4 umfaßt ein Rohrrahmengerüst 22 sowie eine allseitige Verkleidung, die in den Figuren 3 bis 6 der Übersichtlichkeit halber jedoch nicht dargestellt ist. Die Verkleidung ist schallisoliert und es kann, falls erforderlich, zusätzlich eine Innenverkleidung aus entdröhntem Sandwich-Blech vorgesehen sein. In der Verkleidung sind eine obere Eingabeöffnung 8 sowie eine untere Ausgabeöffnung 10 ausgebildet. Eine Schanze 24 aus entdröhntem Sandwich-Blech ist im vertikalen Querschnitt in etwa kreisbogenförmig ausgebildet. Das obere, in etwa vertikal verlaufende Ende der Schanze 24 endet an einer weite der Eingabeöffnung 8 im Bereich einer Seitenwandung des Gehäuses 20, während das andere, untere Ende der Schanze 24 in etwa horizontal verläuft und von der genannten einen Seitenwandung weggerichtet ist. Das untere Ende der Schanze 24 kann noch eine geringfügige Gegensteigung aufweisen, die jedoch nur einige wenige Grad zur Horizontalen einschließt. Die über die Rutsche oder Schanze 24 nach unten gleitenden und um 90° umgelenkten Flaschen fallen anschließend auf eine geneigte Übergabefläche 26, die von einem entdröhntem Übergabeblech 28 gebildet wird. Das Übergabeblech 28 ist gegenüber der Horizontalen beispielsweise um 10° geneigt, und zwar in einer Richtung senkrecht zu der um 90° umgelenkten, horizontalen Flaschenachse 30 und derart, daß die auf das Übergabeblech 28 auftreffenden Flaschen nach unten aus dem Gehäuse 20 der Leitvorrichtung 4 hinaus in Richtung zu dem nachgeschalteten Elevator 12 rollen. Das Übergabeblech 28 kann hinsichtlich seiner Neigung verstellbar sein, in Abhängigkeit vom jeweiligen Transportgegenstand und in Anpassung an die jeweils konkret vorliegende Situation. Wie aus den Figuren deutlich wird, ragt das Übergabeblech 28 durch die Ausgabeöffnung aus dem Gehäuse der Leitvorrichtung heraus, um die Übergabe der Flaschen 6 zu dem nachgeschalteten Elevator 12 zu vereinfachen.

Das Übergabeblech 28 ist vorzugsweise unter vertikalem Abstand zum unteren Ende der Schanze 24 angeordnet, wie sich dies insbesondere aus den Figuren 3, 5 und 6 ergibt. Es wurde herausgefunden, daß hierdurch im wesentlichen vermieden werden kann, daß sich die auf die Übergabefläche 26 auftreffenden Flaschen aus ihrer Soll-Ausrichtung (Flaschenachse 30) stark verdrehen.

Beispielsweise die obere Gehäuseabdeckung kann in nicht näher dargestellter Weise aufklappbar ausgebildet sein, um auf einfache Weise Zugang zum Inneren der Leitvorrichtung zu erhalten. Des weiteren kann in ebenfalls nicht näher dargestellter Weise im Bereich der Eingabeöffnung 8 eine trichterförmige Leitblechanordnung vorgesehen sein, um die anfängliche vertikale Ausrichtung der in die Leitvorrichtung eintretenden Flaschen zu verbessern. Die Breite des Innenraums der Leitvorrichtung ist etwas größer als der Durchmesser der überlicherweise verwendeten Flaschen, so daß sich die gewünschte Ausrichtung der Flaschen in der Regel von selbst ergibt.

Wie durch die Pfeile C, D und E in Fig. 3 skizziert, können die Flaschen der Leitvorrichtung 4 von verschiedenen Seiten oder aber auch von oben zugeführt werden, wobei die Flaschen selbstverständlich auch beispielsweise von Hand in die Öffnung der Leitvorrichtung 4 eingelegt werden können.

Die erfindungsgemäße Leitvorrichtung ist äußert einfach und daher kostengünstig, nachdem sie keine beweglichen Teile aufweist, robust und aufgrund ihrer geringen Bautiefe sehr platzsparend.

## Patentansprüche

1. Leitvorrichtung zum Transport von Flaschen zu einer Flaschenhandhabungseinheit, insbesondere einer Hebevorrichtung, gekennzeichnet durch ein Gehäuse (20) mit einer Eingabeöffnung (8) zum im wesentlichen vertikalen Durchtritt der Flaschen, eine unterhalb der Eingabeöffnungen (8) angeordnete Schanze (24) zum Überführen der Flaschen in eine im wesentlichen horizontale Position, eine im Anschluß an die Schanze (24) angeordnete, geneigte Übergabefläche (26) zum seitlichen Abtransport der im wesentlichen in horizontaler Position befindlichen Flaschen unter Beibehaltung Ihrer im wesentlichen horizontalen Ausrichtung, sowie eine Ausgabeöffnung (10) im Gehäuse (20) im Bereich der geneigten Übergabefläche (26).

2. Leitvorrichtung nach Anspruch 1, dadurch gekennzeichnet, daß sich an die Eingabeöffnung (8) ein trichterförmiger Führungsabschnitt anschließt.

3. Leitvorrichtung nach Anspruch 1 oder 2, dadurch gekennzeichnet, daß sich die geneigte Übergabefläche (26) durch die Ausgabeöffnung (10) aus dem Gehäuse (20) heraus erstreckt.

4. Leitvorrichtung nach einem der vorhergehenden Ansprüche, dadurch gekennzeichnet, daß die Schanze (24) im wesentlichen kreisbogenförmig ausgebildet ist.

5. Leitvorrichtung nach einem der vorhergehenden Ansprüche, dadurch gekennzeichnet, daß die Schanze (24) im wesentlichen vertikal beginnt.

6. Leitvorrichtung nach einem der vorhergehenden Ansprüche, dadurch gekennzeichnet, daß die Schanze (24) im wesentlichten horizontal endet.

7. Leitvorrichtung nach Anspruch 6, dadurch gekennzeichnet, daß die Schanze (24) mit einer geringfügigen Gegensteigung endet.

8. Leitvorrichtung nach einem der vorhergehenden Ansprüche, dadurch gekennzeichnet, daß die geneigte Übergabefläche (26) vom Schanzenende nach unten beabstandet ist.

9. Leitvorrichtung nach einem der vorhergehenden Ansprüche, dadurch gekennzeichnet, daß die Neigung der Übergabefläche (26) verstellbar ist.

10. Leitvorrichtung nach einem der vorhergehenden Ansprüche, dadurch gekennzeichnet, daß das Gehäuse (20) schallisoliert ist.

11. Leitvorrichtung nach einem der vorgehenden Ansprüche, dadurch gekennzeichnet, daß die Schanze (24) und/oder die Übergabefläche (26) aus entdröhntem Sandwich-Blech bestehen.

## Claims

1. Guiding device for transporting bottles to a bottle handling unit, in particular to a lifting device, characterized by a housing (20) with an input opening (8) for substantially vertical passage of the bottles, a deflector (24) disposed below the input openings (8) for transferring the bottles into a substantially horizontal position, an inclined transfer surface (26) disposed downstream of the deflector (24) for laterally carrying away the bottles situated substantially in a horizontal position while maintaining their substantially horizontal alignment, as well as an output opening (10) in the housing (20) in the region of the inclined transfer surface (26).

2. Guiding device according to claim 1, characterized in that a funnel-shaped guide portion adjoins the input opening (8).

3. Guiding device according to claim 1 or 2, characterized in that the inclined transfer surface (26) extends through the output opening (10) and out of the housing (20).

4. Guiding device according to one of the preceding claims, characterized in that the deflector (24) is substantially circular arc-shaped.

5. Guiding device according to one of the preceding claims, characterized in that the front end of the deflector (24) is substantially vertical.

6. Guiding device according to one of the preceding claims, characterized in that the back end of the deflector (24) is substantially horizontal.

7. Guiding device according to claim 6, characterized in that the deflector (24) terminates with a slight counterslope.

8. Guiding device according to one of the preceding claims, characterized in that the inclined transfer surface (26) is spaced apart in a downward direction from the deflector end.

9. Guiding device according to one of the preceding claims, characterized in that the inclination of the transfer surface (26) is adjustable.

10. Guiding device according to one of the preceding claims, characterized in that the housing (20) is sound-proofed.

11. Guiding device according to one of the preceding claims, characterized in that the deflector (24) and/or the transfer surface (26) are made of sound-absorbing composite metal sheet.

## Revendications

1. Dispositif de guidage pour le transport de bouteilles vers une unité de manipulation de bouteilles, en particulier vers un dispositif élévateur, **caractérisé** par un boîtier (20) comportant une ouverture d'entrée (8) pour un passage sensiblement vertical des bouteilles, un glissoir (24) disposé sous l'ouverture d'entrée (8) et destiné à faire passer les bouteilles dans une position sensiblement horizontale, une surface de transfert (26) inclinée, disposée à la suite du glissoir (24) et destinée à évacuer latéralement les bouteilles se trouvant dans une position sensiblement horizontale en conservant leur orientation sensiblement horizontale, ainsi qu'une ouverture de sortie (10) réalisée dans le boîtier (20) dans la région de la surface de transfert (26) inclinée.

2. Dispositif de guidage selon la revendication 1, **caractérisé** par le fait qu'un tronçon de guidage en entonnoir peut faire suite à l'ouverture d'entrée (8).

3. Dispositif de guidage selon la revendication 1 ou 2, **caractérisé** par le fait que la surface de transfert (26) inclinée sort du boîtier (20) à travers l'ouverture de sortie (10).

4. Dispositif de guidage selon l'une des revendications précédentes, **caractérisé** par le fait que le glissoir (24) est réalisé sensiblement en forme d'arc de cercle.

5. Dispositif de guidage selon l'une des revendications précédentes, **caractérisé** par le fait que le glissoir (24) commence pour l'essentiel verticalement.

6. Dispositif de guidage selon l'une des revendications précédentes, **caractérisé** par le fait que le glissoir (24) se termine sensiblement horizontalement.

7. Dispositif de guidage selon la revendication 6, **caractérisé** par le fait que le glissoir (24) se termine avec une légère contre-pente.

8. Dispositif de guidage selon l'une des revendications précédentes, **caractérisé** par le fait que la surface de transfert (26) inclinée est écartée de l'extrémité du glissoir, vers le bas.

9. Dispositif de guidage selon l'une des revendications précédentes, **caractérisé** par le fait que l'inclinaison de la surface de transfert (26) est réglable.

10. Dispositif de guidage selon l'une des revendications précédentes, **caractérisé** par le fait que le boîtier (20) est insonorisé.

11. Dispositif de guidage selon l'une des revendications précédentes, **caractérisé** par le fait que le glissoir (24) et/ou la surface de transfert (26) sont constitués de tôle sandwich antisonique.
